# FASCICULE DE BREVET EUROPEEN

(11) **EP 3 697 729 B1**
(45) Date de publication et mention de la délivrance du brevet: **09.08.2023**
(21) Numéro de dépôt: 18785665.3
(22) Date de dépôt: 18.10.2018
(51) Int. Cl.: C01B 3/06, B01J 19/18, H01M 8/0606, H01M 8/065, H01M 8/04082

(54) **DISPOSITIF DE GÉNÉRATION DE GAZ**
VORRICHTUNG ZUR ERZEUGUNG VON GAS
DEVICE FOR GENERATING GAS

(30) Priorité: 18.10.2017 FR 1759788
(43) Date de publication de la demande: 26.08.2020
(73) Titulaire: Commissariat à l'Energie Atomique et aux Energies Alternatives, 75015 Paris (FR)
(72) Inventeur: BOUVIER, Michaël, 38760 Varces Allieres et Risset (FR); CAPRON, Philippe, 38730 Virieu sur Bourbre (FR); DELMAS, Jérôme, 33700 Merignac (FR); MATHIEU, Vincent, 38500 Saint Cassien (FR); ROUGEAUX, Isabelle, 36690 Chabons (FR)
(74) Mandataire: Cabinet Nony
(86) Numéro de dépôt international: PCT/EP2018/078514
(87) Numéro de publication internationale: WO 2019/077024

(56) Documents cités:
- WO-A1-2010/051557
- WO-A1-2017/164812
- US-A1- 2008 014 479

## Description

La présente invention concerne au principal un appareil pour générer un gaz, et notamment du dihydrogène, par mise en contact d'un liquide réactif avec un catalyseur.

Une méthode bien connue pour générer du dihydrogène consiste à mettre une solution aqueuse d'hydrure, par exemple une solution de borohydrure de sodium, au contact d'un catalyseur de la réaction d'hydrolyse de l'hydrure, formé par exemple de cobalt, de platine, de ruthénium, ou de nickel. Au contact du catalyseur, une réaction d'hydrolyse de la solution aqueuse se produit, générant du dihydrogène.

A titre illustratif, WO 2012/003112 A1 et WO 2010/051557 A1 décrivent chacun un appareil pour mettre en oeuvre une telle hydrolyse catalysée d'hydrure. Les appareils de génération de gaz décrits dans ces documents comportent chacun une enceinte contenant, en fonctionnement, une solution aqueuse d'hydrure, et un dispositif catalytique définissant une chambre de catalyse contenant un catalyseur de l'hydrolyse de la solution aqueuse d'hydrure. Le dispositif catalytique comporte un corps et un couvercle amovible. En position de fermeture du dispositif catalytique, le couvercle et le corps isolent ensemble le catalyseur de la solution aqueuse d'hydrure. Il n'y a alors pas de génération de dihydrogène. En position d'ouverture du dispositif catalytique, le couvercle est disposé à distance du corps. La solution aqueuse d'hydrure entre alors en contact avec le catalyseur, initiant ainsi la génération de dihydrogène, qui est évacué hors de l'enceinte au moyen d'une valve d'évacuation.

Pour éviter que la pression de dihydrogène généré ne soit trop élevée à l'intérieur de l'enceinte, le dispositif catalytique décrit dans WO 2012/003112 A1 comporte une membrane élastomère, se présentant sous la forme d'un tube cylindrique creux, fixée à la fois sur le corps et sur le couvercle. Le corps comporte en outre un drain débouchant hors de l'enceinte à l'une de ses extrémités et dans l'espace intérieur de la membrane à son extrémité opposée, de sorte que la pression dans l'espace intérieur de la membrane est égale à la pression atmosphérique. Ainsi, lorsque la pression de dihydrogène dans l'enceinte résulte en une force supérieure à une force de fermeture, le couvercle est poussé contre le corps sous l'effet de ladite force, contractant la membrane élastomère par effet de torsion, jusqu'à la position fermée du dispositif catalytique. Lorsque la pression dans l'enceinte résulte en une force inférieure à la force de fermeture, la membrane élastomère, cherchant à retrouver sa position d'équilibre, se déploie et dégage le couvercle dans la position ouverte du dispositif catalytique, de sorte à permettre l'accès de la solution aqueuse d'hydrure au catalyseur.

Cependant, afin d'assurer une contraction et un déploiement optimal de la membrane élastomère, il est nécessaire que la hauteur de la membrane soit faible, ce qui limite l'accès au catalyseur de la solution aqueuse à base d'hydrure, et limite le rendement de production de dihydrogène.

En outre, la force de fermeture du dispositif catalytique est déterminée par la rigidité de la membrane élastomère qui dépend de sa forme, de ses dimensions, notamment de son épaisseur, et de ses propriétés mécaniques, notamment élastiques. Le dimensionnement de la membrane élastomère est donc complexe pour assurer une hydrolyse efficace.

Il existe donc un besoin pour un appareil utile pour générer un gaz par mise en contact d'un liquide réactif avec un catalyseur s'affranchissant des inconvénients précités.

A cette fin, l'invention propose un dispositif catalytique comprenant :
- un corps creux,
- un piston logé dans le corps creux,
- un catalyseur d'une réaction de génération d'un gaz par mise en contact d'un liquide réactif avec le catalyseur, le catalyseur étant logé dans une chambre de catalyse,

le piston et le corps creux définissant une chambre de compression hermétique pour contenir un fluide compressible, et étant mobiles l'un par rapport à l'autre entre une position de fermeture dans laquelle la chambre de catalyse est étanche au liquide réactif, et une position d'ouverture pour l'entrée du liquide réactif dans la chambre de catalyse,
le dispositif catalytique étant conformé pour passer de la position d'ouverture à la position de fermeture, respectivement de la position de fermeture à la position d'ouverture, lorsque le fluide compressible est contenu dans la chambre de compression et qu'une force appliquée sur le piston est supérieure ou égale, respectivement inférieure, à une force de fermeture.

La « force de fermeture » correspond à la force minimale à partir de laquelle le dispositif catalytique est dans la position de fermeture.

Comme cela apparaîtra clairement par la suite, le dispositif selon l'invention permet de s'affranchir de la prise d'une pression de référence, notamment atmosphérique, pour définir la force de fermeture. La fabrication du dispositif est ainsi simplifiée. Par ailleurs, la course du piston peut aisément être adaptée pour correspondre aux besoins de la génération de gaz. Comme cela sera détaillé par la suite, il est ainsi possible de favoriser l'accès du liquide réactif à la chambre de catalyse et d'optimiser l'accès du liquide réactif au catalyseur. Il est ainsi possible de réduire la quantité de catalyseur par rapport à un dispositif catalytique de l'art antérieur, tout en conservant un rendement au moins égal, voire supérieur. Par ailleurs, comme cela apparaîtra plus clairement par la suite, le dispositif catalytique selon l'invention peut loger un catalyseur de forme variée, ce qui permet de simplifier le procédé de mise en forme du catalyseur. Par ailleurs, la force de fermeture peut aisément être définie par adaptation du volume et/ou de la pression du fluide compressible dans la position extrême d'ouverture, *i.e.* dans la position où le piston est en fin de course. Enfin, le dispositif catalytique selon l'invention permet de s'affranchir de la mise en oeuvre de moyens, tel qu'un capteur de pression et une unité d'asservissement, pour réguler la pression au sein de la chambre de compression. Il peut donc fonctionner de manière autonome, sans nécessiter en outre de moyen d'alimentation électrique pour déplacer le piston par rapport au corps creux.

Par ailleurs, l'invention peut comporter une ou plusieurs des caractéristiques optionnelles suivantes.

Le catalyseur est de préférence adapté à catalyser l'hydrolyse d'une solution aqueuse comportant un hydrure. De préférence le catalyseur comporte plus de 95,0%, voire plus de 99,0% d'un métal choisi parmi le platine, le ruthénium, le cobalt, le nickel et leurs alliages.

De préférence, le catalyseur est fixé, de préférence rigidement, sur le piston et/ou sur le corps creux.

En particulier, le catalyseur peut être disposé sur un support de catalyse, de préférence poreux, se présentant sous la forme d'un bloc d'épaisseur supérieure à 1 mm. Le support de catalyse peut être formé d'un matériau céramique, polymère ou de préférence métallique. En particulier, le catalyseur peut être disposé dans les pores du support de catalyse. De préférence, le pourcentage en masse du catalyseur, exprimé sur la base de la somme des masses du support de catalyse et masse du catalyseur, est supérieure à 50,0 %.

En variante, le catalyseur peut se présenter sous la forme d'un revêtement présentant une épaisseur inférieure à 1 mm.

Le fluide compressible peut être contenu dans la chambre de compression.

De préférence, le fluide compressible est un gaz, de préférence choisi parmi un gaz neutre et l'air. L'air présente l'avantage d'un faible coût. Un gaz neutre est préféré pour ses propriétés chimiques inertes.

La pression du fluide compressible dans la position extrême d'ouverture peut être égale, voire supérieure à la pression atmosphérique. De préférence, dans une variante où le dispositif comporte une butée disposée de telle sorte que le piston est en appui contre ladite butée dans la position extrême d'ouverture, dans la position extrême d'ouverture, la pression du fluide compressible est supérieure à 1,1 bar, voire de préférence supérieure à 1,2 bar. La « pression » est définie par rapport à la référence de pression nulle dans le vide.

De préférence, la pression du fluide compressible dans la chambre de compression dans la position de fermeture est supérieure à la pression du fluide compressible dans la chambre de compression dans la position extrême d'ouverture.

De préférence, la pression du fluide compressible dans la chambre de compression, dans la position de fermeture, est supérieure à la pression atmosphérique.

De préférence, le piston et le corps creux sont mobiles en translation et/ou en rotation l'un par rapport à l'autre entre les positions ouverte et fermée. De préférence, le piston est mobile en translation par rapport au corps creux selon un unique axe. De préférence, le corps creux est conformé pour guider le piston en translation. De préférence, le corps creux comporte un fût de guidage cylindrique et creux conformé pour guider le piston en translation.

De préférence, aucun moyen de rappel du piston, notamment un ressort, n'est logé dans la chambre de compression.

De préférence, le piston et le corps creux définissent la chambre de catalyse. Ainsi le dispositif catalytique est de fabrication aisée, la chambre de catalyse et la chambre de compression étant définies par les mêmes organes.

Dans un mode de réalisation, le corps peut être monobloc. En variante, le corps peut comporter une pièce et un bouchon monté amovible sur la pièce.

Le corps peut comporter une soupape configurée pour purger le fluide compressible de la chambre de compression.

Le dispositif comporte de préférence une butée disposée de telle sorte que le piston est en appui contre ladite butée dans la position extrême d'ouverture.

Dans un mode de réalisation, le corps peut comporter une pièce présentant un fût de guidage cylindrique et creux conformé pour guider le piston, un réservoir de stockage et un organe de connexion fluidique reliant ladite pièce au réservoir de stockage. Par exemple, le fût de guidage peut être disposé dans l'enceinte d'un appareil de génération de gaz et le réservoir de stockage peut être disposé hors de ladite enceinte. Ainsi, en déportant le volume de fluide compressible hors de l'enceinte, le volume accessible au liquide dans l'enceinte est augmenté.

Le piston comporte de préférence un couvercle, le couvercle étant en appui sur le corps creux dans la position de fermeture et obturant intégralement l'ouverture, et étant disposé à distance du corps creux dans la position d'ouverture.

De préférence, dans la position d'ouverture, lorsque l'espace intérieur de l'enceinte contient le liquide réactif, plus de 50%, de préférence plus de 80%, de préférence plus de 90%, voire notamment toute la surface du catalyseur exempte de contact avec le piston et/ou avec le corps creux est exposée au liquide réactif.

De préférence, au moins une partie du catalyseur est fixée sur le corps creux et/ou sur le piston.

De préférence, la force de fermeture est supérieure à la force exercée par la pression du fluide compressible sur le piston dans la position extrême d'ouverture.

L'invention concerne encore un appareil de génération d'un gaz comportant une enceinte définissant un espace intérieur pour contenir un liquide réactif, et un dispositif catalytique selon l'invention, l'appareil étant configuré de sorte que lorsque l'espace intérieur contient le liquide réactif, dans la position d'ouverture du dispositif catalytique, la chambre catalytique est en communication de fluide avec l'espace intérieur, de sorte que le gaz est généré par mise en contact du liquide réactif avec le catalyseur, et dans la position de fermeture du dispositif catalytique, le catalyseur est isolé du liquide réactif.

De préférence, le dispositif catalytique est disposé au moins partiellement, voire intégralement, dans l'espace intérieur de l'enceinte.

En particulier, le corps du dispositif catalytique peut comporter une pièce présentant un fût de guidage cylindrique et creux conformé pour guider le piston, un réservoir de stockage et un organe de connexion fluidique reliant ladite pièce au réservoir de stockage, le réservoir de stockage étant disposé hors de l'espace intérieure de l'enceinte.

Dans un mode de réalisation, lorsque l'espace intérieur de l'enceinte contient le liquide réactif, le piston est plus proche de la surface libre du liquide réactif dans la position de fermeture que dans la position d'ouverture.

L'enceinte peut contenir le liquide réactif. De préférence, dans la position extrême d'ouverture, la pression du fluide compressible dans la chambre de compression est supérieure à la pression de gaz dans l'espace intérieur.

Par ailleurs, l'appareil peut comporter au moins deux dispositifs catalytiques.

Il est aussi décrit une méthode, non revendiquée, de dimensionnement d'un dispositif selon l'invention dans lequel :
- on définit la course du piston entre la position de fermeture et la position extrême d'ouverture par sélection d'au moins un paramètre choisi parmi la force de fermeture, le volume de la chambre de compression dans la position extrême d'ouverture, la pression du fluide compressible dans la position extrême d'ouverture et le cas échéant le diamètre du fût de guidage, ou
- on définit la force de fermeture par sélection d'au moins un paramètre choisi parmi le volume de la chambre de compression dans la position extrême d'ouverture, la pression du fluide compressible dans la position extrême d'ouverture, la course du piston et le cas échéant le diamètre du fût de guidage.

La position extrême d'ouverture peut être définie au moyen d'une butée disposée de telle sorte que le piston est en appui contre ladite butée dans la position extrême d'ouverture.

L'invention concerne en outre un procédé de génération d'un gaz par mise en contact d'un liquide réactif avec un catalyseur de la réaction de génération du gaz, le procédé comportant les étapes successives suivantes consistant à :
i) disposer d'un appareil selon l'invention dans lequel l'espace intérieur de l'enceinte contient le liquide réactif,
ii) placer le dispositif catalytique dans la position d'ouverture, de sorte que le liquide réactif entre en contact avec le catalyseur.

De préférence, le gaz est le dihydrogène, le catalyseur est adapté à catalyser l'hydrolyse d'une solution aqueuse comportant un hydrure, de préférence le catalyseur comporte plus de 95,0% d'un métal choisi parmi le platine, le ruthénium, le cobalt, le nickel et leurs alliages, et le liquide réactif est une solution aqueuse comportant un hydrure. Il est aussi décrit un générateur électrique, non revendiqué, comportant :
- une pile à combustible pour générer un courant électrique par oxydation d'un gaz,
- un appareil de génération de gaz selon l'invention,
l'appareil étant en communication de fluide avec la pile à combustible et étant configuré pour alimenter la pile combustible en ledit gaz.

D'autres caractéristiques, variantes et avantages de l'invention ressortiront mieux à la lecture de la description détaillée et des exemples qui vont suivre, donnés à titre illustratif et non limitatif, et à l'examen du dessin annexé, sur lesquels :
- les figures 1 et 2 représentent, en coupe selon un plan longitudinal, un exemple d'appareil de génération de gaz selon l'invention, dans lequel le dispositif catalytique est disposé en position d'ouverture, respectivement en position de fermeture,
- les figures 3 à 8 illustrent différentes variantes du dispositif catalytique selon l'invention, et
- les figures 9 et 10 sont des graphiques représentant l'évolution du débit et l'évolution de la pression dans l'enceinte d'un appareil hors invention et d'un appareil selon l'invention respectivement, au cours de la mise en oeuvre du procédé de génération de dihydrogène au moyen desdits appareils.

Dans les figures, les échelles et proportions des différents organes et unités constituant l'appareil et le dispositif ne sont pas nécessairement respectées. Par ailleurs, par souci de clarté, des organes peuvent être représentés comme n'étant pas au contact les uns des autres alors qu'ils le sont en pratique. Par ailleurs, des références différentes peuvent désigner un même organe.

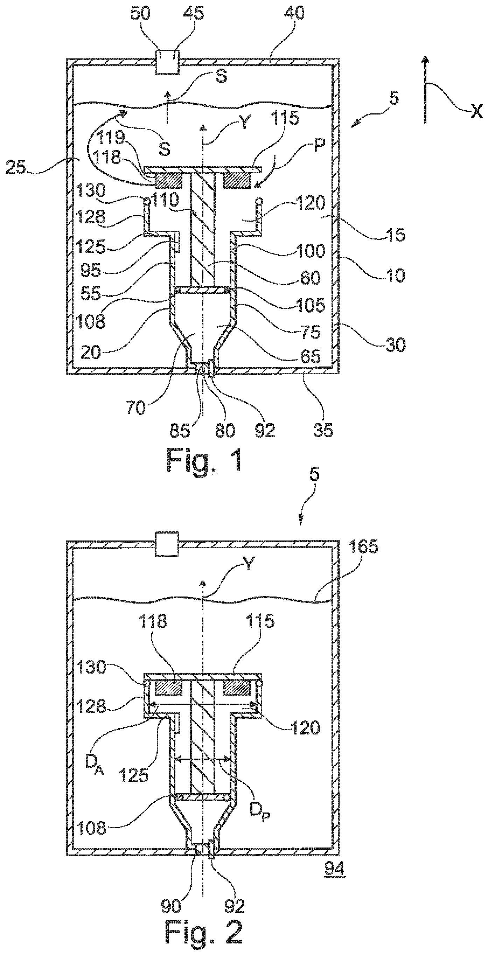

La figure 1 représente un exemple de réalisation d'appareil 5 de génération de gaz selon l'invention.

L'appareil comporte une enceinte 10 définissant un espace intérieur 15, dans lequel est disposé un dispositif catalytique 20 selon l'invention.

Dans l'exemple illustré sur la figure 1, l'enceinte contient un liquide réactif 25. Par exemple, lorsque l'appareil est destiné à générer du dihydrogène, le liquide réactif contenu dans l'enceinte est une solution aqueuse d'hydrure, comportant par exemple du borohydrure de sodium et/ou du borohydrure de potassium. Par ailleurs, préalablement à la génération de gaz, l'espace intérieur peut être exempt du liquide réactif.

L'enceinte comporte une paroi latérale 30 qui s'étend selon une direction longitudinale X, une paroi inférieure 35 définissant un fond de l'enceinte lorsque la direction longitudinale X est parallèle à la direction de la gravité et orientée dans le sens opposé à la gravité, tel qu'illustré sur la figure 1 et une paroi supérieure 40, présentant une ouverture 45 d'évacuation du gaz. Comme cela est illustré sur les figures 1 et 2, une valve 50 peut être disposée dans l'ouverture d'évacuation du gaz.

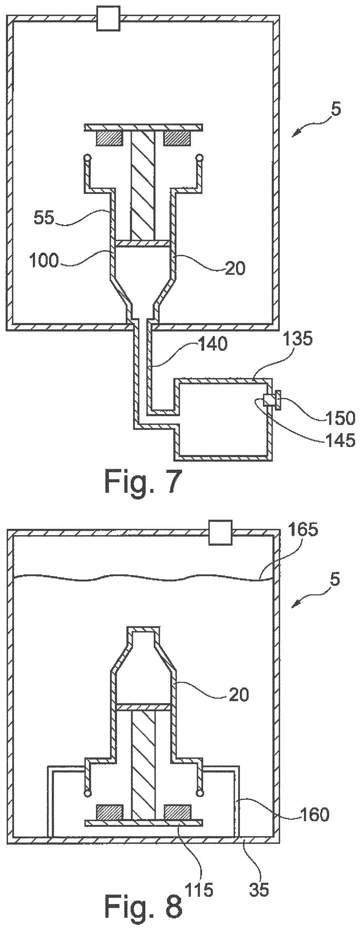

Dans l'exemple de la figure 1, le dispositif catalytique est disposé dans l'espace intérieur de l'enceinte, et est fixé au fond de l'enceinte. D'autres dispositions du dispositif catalytique sont toutefois envisageables. Par exemple, le dispositif catalytique peut être fixé à au moins une des parois latérales ou à la paroi supérieure. Par ailleurs, le dispositif catalytique peut être disposé partiellement hors de l'espace intérieur, comme illustré sur la figure 7. Il peut même être disposé totalement hors de l'espace intérieur.

Le dispositif catalytique illustré sur les figures 1 et 2 comporte un corps 55 creux dans lequel est logé un piston 60. Le corps creux et le piston définissent ensemble une chambre de compression 65 pour contenir un fluide compressible. Dans les exemples des figures 1 et 2, la chambre contient ledit fluide compressible 70. Dans l'exemple des figures 1 et 2, le corps creux comporte une pièce 75 présentant une ouverture 80 traversant la paroi de la pièce dans son épaisseur et un bouchon 85 monté amovible sur la pièce. L'ouverture est ménagée sur une paroi de la pièce au contact du fond du récipient, et le fond du récipient comporte un trou 90 découchant sur l'ouverture de la pièce. De cette façon, en ôtant le bouchon de la pièce, il est possible de remplir la chambre de compression avec le fluide compressible. Afin d'assurer une étanchéité au fluide compressible, le bouchon est surmonté de préférence d'un joint d'étanché pris en sandwich entre la pièce et le bouchon lorsque le bouchon est monté sur la pièce. Dans une variante non représentée, le piston présente une ouverture fermée par un bouchon amovible, de sorte à introduire le fluide compressible dans la chambre de compression. Dans une autre variante, l'ouverture 80 est munie d'une valve de gonflage, pour ajuster la pression du fluide compressible en fonction de l'application à laquelle le dispositif est destiné. Par exemple, selon une variante de mise en oeuvre du dispositif catalytique, la chambre de compression est exempte de fluide compressible, le système catalytique est disposé en position de fermeture, et moins d'une heure, voire moins de 10 minutes, voire même moins de 5 minutes avant la mise en position d'ouverture du système catalytique, on injecte le fluide compressible dans la chambre de compression par l'intermédiaire de la valve de gonflage.

Comme précisé ci-dessus, la chambre de compression est hermétique. Ainsi, lorsque le fluide compressible est contenu dans la chambre de compression, la fuite du fluide compressible hors de ladite chambre de compression est sensiblement nulle.

Par ailleurs, le corps creux comporte une soupape 92 disposée dans une ouverture ménagée dans la paroi du corps et dans la paroi de l'enceinte. La soupape est configurée de sorte que lorsque la pression dans la chambre de compression dépasse une valeur critique, la soupape est ouverte, mettant l'enceinte en communication de fluide avec l'environnement extérieur 94 à l'enceinte, qui est de préférence à pression atmosphérique.

Le piston et le corps creux sont mobiles l'un par rapport à l'autre, de préférence en translation et/ou en rotation. De préférence, ils sont mobiles en translation selon un unique axe l'un par rapport à l'autre, comme cela est illustré sur les figures 1 et 2, entre une position d'ouverture et une position de fermeture. Bien évidemment, comme cela apparait clairement sur lesdites figures, le dispositif catalytique peut être disposé dans plusieurs positons d'ouvertures. Notamment lorsque le piston a atteint sa course, le dispositif est disposé en position extrême d'ouverture.

Dans l'exemple illustré sur les figures 1 et 2, le corps creux comporte un fût de guidage 100 cylindrique et creux d'axe Y, de préférence de révolution, et le piston comporte une tête de piston 105 dont une face définit partiellement la chambre de compression. La tête de piston présente une forme d'une plaque sur les figures 1 et 2, mais d'autres formes sont envisageables. Par ailleurs, dans l'exemple des figures 1 et 2, le dispositif est en position extrême d'ouverture lorsque la tête de piston est au contact d'une butée 95 disposée sur la paroi interne du fût de guidage.

La tête de piston présente une section, observée dans le plan normal à l'axe Y du fût de guidage, de forme complémentaire à la section de la paroi interne du fût de guidage, de façon à étanchéifier la chambre de compression. Afin d'améliorer encore ladite étanchéité, la tête de piston peut comporter un joint 108 annulaire prenant appui sur la paroi interne du fût de guidage.

Par ailleurs, le piston comporte un arbre 110, coaxial avec le fût de guidage, fixé rigidement à une de ses extrémités à la tête de piston, ainsi qu'un couvercle 115, fixé rigidement à son extrémité opposée. Un catalyseur 118 de la réaction de génération de gaz par mise en contact du catalyseur avec le liquide réactif est disposé sur le couvercle. Il est logé dans le corps creux en position de fermeture du dispositif catalytique.

En position de fermeture, le couvercle repose sur le corps creux. Ainsi, comme cela apparaît clairement sur la figure 2, le piston et le corps creux définissent ensemble une chambre de catalyse 120.

Dans l'exemple de la figure 1, le corps comporte par ailleurs un épaulement 125 duquel s'étend une portion annulaire 128, dont la face d'extrémité est surmontée d'un joint d'étanchéité 130, sur lequel vient reposer le couvercle 115 en position de fermeture. L'ensemble formé par l'épaulement et la portion annulaire définit un réceptacle pour loger le catalyseur en position fermée. La portion annulaire est cylindrique, de préférence de révolution, et peut être d'axe confondu avec l'axe Y du fût de guidage. Le diamètre D_{A} de la portion annulaire est supérieur au diamètre D_{P} de la tête de piston, les diamètres étant mesurés perpendiculairement à l'axe Y de la portion annulaire. Le diamètre de la portion annulaire, supérieur à celui de la portion de guidage et de la tête de piston, permet en outre de définir une chambre de catalyse de large volume, favorisant ainsi l'échange entre le liquide réactif et le catalyseur en position d'ouverture. Dans un mode de réalisation non représenté, le dispositif peut ne comporter ni l'épaulement ni la portion annulaire et le couvercle peut reposer en position de fermeture directement sur le fût de guidage, éventuellement surmonté d'un joint d'étanchéité. Dans une variante, la face du couvercle en regard de la chambre de catalyse peut être recouverte d'une couche en un polymère souple, par exemple en silicone ou en élastomère « epdm », pour assurer l'étanchéité de la chambre catalytique en position de fermeture.

Dans l'exemple de la figure 1, le catalyseur 118 est disposé sur un support de catalyse 119 fixé sur le couvercle 115. En variante, il peut être disposé sur le piston. Dans une autre variante, il peut être disposé sur le corps creux et/ou fixé au corps creux. En particulier, il peut être disposé sur l'épaulement 125 et/ou sur la portion annulaire 128. Dans une autre variante, une partie du catalyseur peut être disposé au contact du corps creux et une autre partie du catalyseur peut être disposé sur le piston.

En ce qui concerne la forme du catalyseur, il peut se présenter sous la forme d'un revêtement, d'épaisseur inférieure à 1 mm, par exemple déposé sur la face du couvercle dont une normale est orientée vers la chambre de catalyse ou sur la face interne de la paroi du corps creux, par exemple sur la paroi interne de la portion annulaire 128 ou de l'épaulement 125. Le revêtement peut être déposé par voie chimique ou par voie électrochimique ou par dépôt physique en phase vapeur ou par dépôt chimique en phase vapeur.

Comme détaillé ci-dessus, le catalyseur peut en variante être déposé dans les pores d'un support de catalyse poreux.

On détaille ci-dessous un mode de mise en oeuvre du procédé selon l'invention au moyen d'un dispositif de catalyse selon l'invention, tel que par exemple illustré sur la figure 1.

Préalablement à la génération de gaz, le dispositif catalytique est de préférence disposé dans la configuration de fermeture. Ainsi, la génération de gaz est empêchée, le liquide réactif contenu dans l'enceinte ne pouvant pénétrer dans la chambre de catalyse. Afin d'initier la génération de gaz, le dispositif est alors disposé dans la position d'ouverture.

Dans une variante, préalablement à la génération de gaz, le dispositif catalytique peut être disposé dans la configuration d'ouverture. La génération de gaz est initiée, la pression de gaz dans l'enceinte augmente jusqu'à ce que la force résultante qu'elle exerce sur le dispositif catalytique dispose le système catalytique dans la position de fermeture.

Dans une autre variante, préalablement à la génération de gaz, l'enceinte peut comporter le liquide réactif sous pression, et la force exercée par la pression du liquide réactif sous pression maintient le système catalytique dans la position de fermeture jusqu'à ce que la génération de gaz soit initiée.

En variante, préalablement à la génération de gaz, le dispositif catalytique est disposé dans la position ouverte, et l'enceinte est exempte du liquide réactif. L'enceinte peut toutefois comporter un liquide autre que le liquide réactif, par exemple de l'eau, mais qui au contact du catalyseur ne réagit pas pour générer un gaz. Par exemple, pour initier la réaction de génération de gaz, un sel, notamment borohydrure, est versé dans l'espace intérieur pour former le liquide réactif par dissolution dans l'eau.

Préalablement à la génération de gaz, une pression initiale de liquide réactif règne dans l'espace intérieur de l'enceinte. La pression initiale est inférieure ou égale, voire égale à la pression dans la chambre de compression. En particulier, elle peut être égale à la pression atmosphérique.

Dans la variante où, préalablement à la génération de gaz, le dispositif est dans la position d'ouverture et la pression du fluide compressible est supérieure à la pression dans l'enceinte, le fluide compressible exerce un effort de poussée sur le piston de sorte à augmenter le volume de la chambre de compression. De préférence, le dispositif catalytique comporte une butée, telle par exemple celle portant la référence 95 illustrée sur la figure 1, de sorte à limiter la course du piston dans le corps creux et définir ainsi la position extrême d'ouverture.

Dans la variante où, préalablement à toute génération de gaz, le dispositif est dans la position d'ouverture et la pression dans la chambre de compression est égale à la pression dans l'enceinte, les efforts résultant des effets des pressions du fluide compressible et du liquide réactif ainsi que par le poids du piston se compensent, définissant la position extrême d'ouverture du dispositif.

Dans la position d'ouverture, le liquide réactif contenu dans l'enceinte peut pénétrer dans la chambre de catalyse par l'ouverture définie entre le piston et le corps creux. Le liquide réactif entre en contact du catalyseur, et le gaz est ainsi généré. Le gaz s'évacue alors par effet de poussée d'Archimède hors de la chambre de catalyse vers l'espace intérieur de l'enceinte comme illustré par la flèche S. Le volume de l'enceinte accessible au gaz étant limité, la pression du gaz et la pression du liquide réactif augmentent dans l'enceinte. Notamment, tant que le liquide réactif entre en contact du catalyseur, le gaz est généré et la pression du gaz et la pression du liquide réactif augmentent. Le gaz contenu dans l'enceinte peut par ailleurs être évacué au travers de la valve d'évacuation hors de l'enceinte.

La pression dans l'enceinte étant supérieure à la pression du fluide compressible dans la chambre de compression, l'effort résultant sur le piston déplace le piston qui comprime le fluide compressible. Le volume de la chambre de compression diminue et la pression du fluide compressible de la chambre de compression augmente. Le mouvement de compression du piston s'opère jusqu'à ce que la pression dans la chambre de compression soit équilibrée avec la pression dans l'enceinte. Le dispositif peut ainsi être disposé dans position d'ouverture intermédiaire entre la position extrême d'ouverture et la position de fermeture. Dans l'exemple de la figure 2, la pression dans l'enceinte est égale à une pression seuil telle que le dispositif est amené en position de fermeture. Dans l'exemple des figures 1 et 2, la fermeture du dispositif par déplacement du piston s'effectue par recouvrement de la portion annulaire 128 par le couvercle 115, obturant la chambre de catalyse. La génération de gaz est alors inhibée, la chambre de catalyse étant étanche au liquide réactif dans la position de fermeture. Le liquide réactif contenu dans l'enceinte ne peut alors plus pénétrer dans la chambre de catalyse. Le dispositif est ainsi disposé en position fermée dès que la pression dans l'enceinte résulte en une force s'exerçant sur le piston supérieure ou égale à la force de fermeture. Dans la variante où le dispositif catalytique alimente une pile à combustible, le gaz généré préalablement à la fermeture du dispositif catalytique encore contenu dans l'enceinte s'évacue alors hors de l'enceinte au travers de la valve.

Ainsi, la pression du liquide réactif devient inférieure ou égale à la pression du fluide compressible dans la chambre de compression. L'effort résultant sur le piston est alors tel que le fluide compressible repousse le piston de la position fermée dans la position d'ouverture, voire jusqu'à la position extrême d'ouverture. Le liquide réactif entre alors de nouveau en contact avec le catalyseur et la génération de gaz recommence. La succession de cycles d'ouverture/fermeture continue ainsi tant que la mise en contact du liquide réactif avec le catalyseur entraîne une production de gaz.

Par ailleurs, comme cela a été détaillé précédemment, le dimensionnement du dispositif catalytique peut être adapté aux contraintes spécifiques liées à l'utilisation du gaz généré au moyen du dispositif catalytique. Par exemple, lorsque le gaz généré est le dihydrogène et est destiné à alimenter une pile à combustible, le dispositif catalytique peut être dimensionné de sorte que le dihydrogène en sortie de l'appareil présente une pression correspondant à celle nécessaire pour un rendement optimal de la pile à combustible.

En particulier, la course du piston entre la position de fermeture et la position extrême d'ouverture peut être définie par sélection d'au moins un paramètre choisi parmi la force de fermeture, le volume de la chambre de compression dans la position extrême d'ouverture, la pression du fluide compressible dans la position extrême d'ouverture et le cas échéant le diamètre du fût de guidage. En variante, la force de fermeture peut être définie par sélection d'au moins un paramètre choisi parmi le volume de la chambre de compression dans la position extrême d'ouverture, la pression du fluide compressible dans la position extrême d'ouverture, la course du piston et le cas échéant le diamètre du fût de guidage.

Ainsi, l'exposition du catalyseur au liquide réactif dans la position d'ouverture peut être optimisée tout en conservant un dispositif compact, occupant un volume limité au sein de l'appareil de génération de gaz.

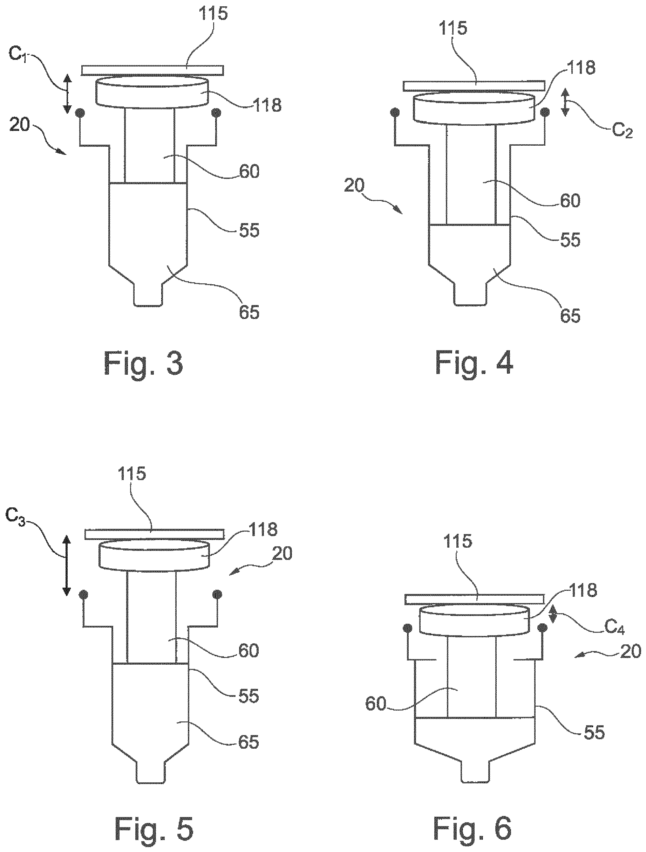

Par exemple, les figures 3 et 4 illustrent des exemples de dispositifs disposés en position extrême d'ouverture et configurés pour atteindre leur position de fermeture pour une force de fermeture identique. Les dispositifs catalytiques des figures 3 et 4 comportent des corps creux et des pistons identiques, et ne diffèrent que par le volume de fluide compressible qu'ils contiennent en position extrême d'ouverture. Notamment, la pression du fluide compressible dans la position extrême d'ouverture est identique pour les deux dispositifs. Pour une variation de pression identique entre les positions extrême d'ouverture et de fermeture, la course C₁ du piston du dispositif catalytique de la figure 3 est supérieure à la course C₂ du piston du dispositif catalytique de la figure 4. Ainsi, entre la position extrême d'ouverture et la position de fermeture, le dispositif catalytique de la figure 3 favorise plus l'exposition du catalyseur au liquide réactif par rapport au dispositif catalytique de la figure 4. Le dispositif catalytique illustré sur la figure 4 présente toutefois l'avantage d'une meilleure compacité que celui illustré sur la figure 3.

Les figures 5 et 6 illustrent des dispositifs catalytiques configurés pour atteindre leur position de fermeture pour une force de fermeture identique. Le dispositif catalytique de la figure 6 diffère du dispositif catalytique de la figure 5 en ce qu'il présente un fût de guidage de diamètre supérieur. Dans les positions extrêmes d'ouvertures, les dispositifs catalytiques des figures 5 et 6 comportent un volume identique de fluide compressible. Par ailleurs, la pression du fluide compressible dans la position extrême d'ouverture est identique pour les deux dispositifs. Pour une variation de pression identique entre les positions extrême d'ouverture et de fermeture, la course C₃ du piston du dispositif catalytique de la figure 5 est supérieure à la course C₄ du piston du dispositif de la figure 6. Ainsi, entre la position extrême d'ouverture et la position de fermeture, le dispositif catalytique de la figure 5 favorise plus l'exposition du catalyseur au liquide réactif par rapport au dispositif catalytique de la figure 6.

L'appareil représenté sur la figure 7 diffère de celui illustré sur la figure 1 en ce que le dispositif catalytique est disposé partiellement au sein de l'enceinte. Le dispositif catalytique présente un corps comportant une pièce présentant un fût de guidage 100 cylindrique et creux dans lequel est logé le piston, un réservoir de stockage 135 et un organe de connexion fluidique 140 reliant ladite pièce au réservoir de stockage. L'organe de connexion fluidique peut être un tuyau souple comme présenté sur la figure 7, ou un connecteur rigide. Il peut être monté amovible, par exemple vissé sur la pièce ou sur l'enceinte. En variante, l'organe de connexion fluidique et la pièce définissent un ensemble monolithique. Pour ce qui concerne le réservoir de stockage, dans l'exemple de la figure 7, il est disposé hors de l'enceinte. En variante, il peut être disposé dans l'enceinte. Par ailleurs, comme illustré sur la figure 7, il peut comporter une ouverture 145 traversant une paroi du réservoir dans son épaisseur, sur lequel est monté un bouchon de réservoir 150 amovible. Ainsi, le fluide compressible peut être injecté dans la chambre de compression, par exemple préalablement à la génération de gaz ou au cours de la génération de gaz pour compenser les fuites éventuelles de fluide compressible.

L'appareil illustré sur la figure 8 diffère de l'appareil illustré sur la figure 1, en ce que le dispositif catalytique est tel que le couvercle 115 du piston fait face au fond 35 de l'enceinte. Afin de permettre le déplacement du piston dans l'enceinte, le dispositif catalytique est maintenu à distance de l'enceinte au moyen d'un espaceur 160 sous la forme de pattes de fixation. Lorsque l'espace intérieur comporte le liquide réactif comme illustré, le piston est situé à plus grande distance de la surface libre 165 du liquide réactif dans la position d'ouverture du dispositif que dans la position de fermeture. L'appareil illustré sur la figure 8 présente l'avantage de permettre l'exposition du catalyseur avec le liquide réactif lorsque le volume de liquide réactif restant suite à la génération de gaz est faible dans l'enceinte. Il est particulièrement adapté dans le cas où le dispositif catalytique présente une hauteur supérieure à la hauteur du liquide réactif dans l'enceinte lorsque l'espace intérieur de l'enceinte est intégralement rempli de liquide réactif, les hauteurs étant mesurées selon la direction de la gravité.

### Exemples

L'invention est illustrée au moyen des exemples non limitatifs suivants.

### Exemple comparatif

On réalise une génération de gaz au moyen d'un appareil tel qu'illustré sur la figure 1, dans lequel est disposé un dispositif catalytique sous la forme de la bouée décrite dans WO 2012/003112. Le dispositif catalytique comporte 700 mg de cobalt ruthénium déposé sur un support de catalyse métallique et poreux d'une masse de 400 mg et l'espace intérieur de l'enceinte, d'une contenance de 1600 ml, contient 500 g d'une solution de borohydrure de sodium. La chambre de compression du dispositif catalytique contient de l'air.

L'appareil est relié à un débitmètre réglable qui impose un débit de consigne de 1000 ml/min.

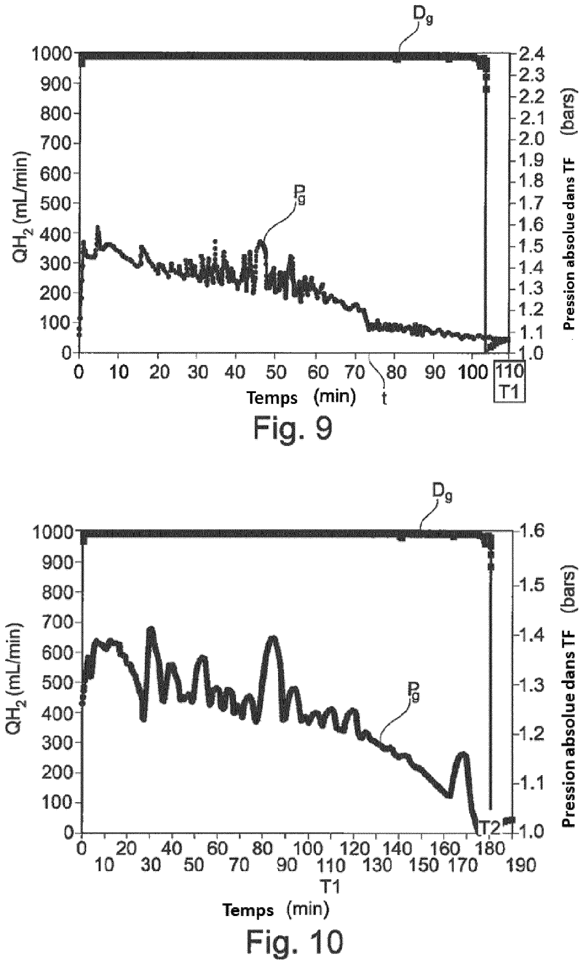

La figure 9 illustre l'évolution de la pression Pg de dihydrogène généré par mise en contact de la solution d'hydrure avec le catalyseur dans l'enceinte ainsi que l'évolution du débit Dg de dihydrogène au cours de la génération de gaz en fonction du temps t de mise en oeuvre du procédé de génération de dihydrogène.

A t₀=0, le dispositif catalytique est disposé en configuration d'ouverture. Le liquide réactif pénètre dans la chambre de catalyse et entre au contact du catalyseur. Le débit de consigne est immédiatement atteint et la pression augmente dans la chambre, jusqu'à ce que le piston soit repoussé en position de fermeture. Des cycles d'ouverture et de fermeture de la bouée de WO 2012/003112 ont ainsi lieu de sorte que le débit de consigne est maintenu tout au long de la génération de gaz, jusqu'à ce que la pression atteigne 1,1 bar. La pression de dihydrogène dans l'enceinte décroit à t₁=110 min. A partir de cet instant, la pression dans l'enceinte devient égale à la pression atmosphérique. L'appareil de l'art antérieur ne peut plus produire du gaz dans une quantité suffisante pour assurer le débit de consigne. Un volume total Vi = 110 1 de gaz est ainsi produit. Il reste des hydrures dans la solution aqueuse, mais leur faible concentration dans la solution et l'accessibilité au catalyseur restreinte entraîne une baisse du débit de gaz généré, qui devient inférieur au débit de consigne.

Ainsi, le rendement du procédé, défini comme le rapport entre la masse totale d'hydrogène généré et la masse totale de solution du procédé de l'art antérieur est de 1,8%.

### Exemple selon l'invention

Un essai de génération de gaz est réalisé avec l'appareil illustré sur la figure 1, comportant les mêmes quantités de catalyseur et de solution de borohydrure de sodium que dans l'exemple comparatif.

Le dispositif catalytique est dimensionné de sorte que, dans la position extrême d'ouverture, la pression d'air au sein de la chambre de compression est égale 1,25 bar.

La figure 10 illustre l'évolution des pression Pg et débit Dg de dihydrogène dans l'enceinte en fonction du temps t de mise en oeuvre du procédé de génération de dihydrogène.

A l'instant t₀=0, le système catalytique est disposé en position ouverte. La génération de gaz commence et le débit de consigne de gaz généré est atteint (valeur de 1000 ml/min) dès le premier cycle de mise en oeuvre du procédé.

La génération de gaz se poursuit ainsi jusqu'à ce que la concentration en hydrures soit trop faible pour maintenir le débit de consigne (instant t₁=180 min), comme cela est observé sur la figure 10. Un volume total V₂ = 180 1 de dihydrogène est ainsi produit.

Ainsi, le rendement en dihydrogène du procédé selon l'invention est de 3,0 %.

Comme cela apparait clairement de la présente description, la génération de gaz, notamment de dihydrogène, au moyen d'un appareil doté du dispositif selon l'invention peut aisément être adaptée en fonction de l'application à laquelle le gaz généré est destiné. Notamment, la plage de pression du gaz en sortie d'appareil peut être réglée par un choix adapté de la course du piston et des pression et volume de fluide compressible dans la position extrême d'ouverture. L'invention permet d'initier une génération de dihydrogène de manière efficace, fiable et sûre avec un rendement élevé.

Notamment, le dispositif catalytique peut être disposé hors de l'enceinte de l'appareil. L'enceinte peut comporter un liquide réactif autre qu'une solution aqueuse d'hydrures et être destinée à générer un gaz autre que le dihydrogène, par exemple de l'oxygène.

## Revendications

1. Dispositif catalytique (20) comprenant :
- un corps creux (55),
- un piston (60) logé dans le corps creux,
- un catalyseur d'une réaction de génération d'un gaz par mise en contact d'un liquide réactif (25) avec le catalyseur (118), le catalyseur étant logé dans une chambre de catalyse (120),
le piston et le corps creux définissant une chambre de compression (65) hermétique pour contenir un fluide compressible (70), et étant mobiles l'un par rapport à l'autre entre une position de fermeture dans laquelle la chambre de catalyse est étanche au liquide réactif, et une position d'ouverture pour l'entrée du liquide réactif dans la chambre de catalyse,
le dispositif catalytique étant conformé pour passer de la position d'ouverture à la position de fermeture, respectivement de la position de fermeture à la position d'ouverture, lorsque le fluide compressible est contenu dans la chambre de compression et qu'une force appliquée sur le piston est supérieure ou égale, respectivement inférieure, à une force de fermeture.

2. Dispositif catalytique selon la revendication 1, dans lequel le catalyseur est adapté à catalyser l'hydrolyse d'une solution aqueuse comportant un hydrure, de préférence le catalyseur comporte plus de 95,0% d'un métal choisi parmi le platine, le ruthénium, le cobalt, le nickel et leurs alliages.

3. Dispositif catalytique selon l'une quelconque des revendications 1 et 2, dans lequel le fluide compressible est contenu dans la chambre de compression, le fluide compressible étant de préférence un gaz, de préférence choisi parmi un gaz neutre et l'air.

4. Dispositif catalytique selon l'une quelconque des revendications précédentes, dans lequel le corps comporte une soupape (92) configurée pour purger le fluide compressible de la chambre de compression.

5. Dispositif catalytique selon l'une quelconque des revendications précédentes, comportant une butée (95) disposée de telle sorte que le piston est en appui contre ladite butée dans la position extrême d'ouverture.

6. Dispositif catalytique selon l'une quelconque des revendications 3 à 5, dans lequel la pression du fluide compressible dans la position extrême d'ouverture est égale ou supérieure à la pression atmosphérique.

7. Dispositif catalytique selon l'une quelconque des revendications précédentes, dans lequel le catalyseur est fixé, de préférence rigidement, sur le piston et/ou sur le corps creux.

8. Dispositif catalytique selon l'une quelconque des revendications précédentes, dans lequel le catalyseur est disposé sur un support de catalyse, de préférence poreux, se présentant sous la forme d'un bloc d'épaisseur supérieure à 1 mm, ou se présente sous la forme d'un revêtement présentant une épaisseur inférieure à 1 mm.

9. Dispositif catalytique selon la revendication précédente, dans lequel le pourcentage en masse du catalyseur, exprimé sur la base de la somme des masse du support de catalyse et masse du catalyseur, est supérieure à 50,0 %.

10. Dispositif catalytique selon l'une quelconque des revendications précédentes, dans lequel le piston comporte un couvercle (115), le couvercle étant en appui sur le corps creux dans la position de fermeture et obturant intégralement la chambre de catalyse, et étant disposé à distance du corps creux dans la position d'ouverture.

11. Appareil (5) de génération d'un gaz comportant une enceinte (10) définissant un espace intérieur (15) pour contenir un liquide réactif (25), et un dispositif catalytique (20) selon l'une quelconque des revendications précédentes,
l'appareil étant configuré de sorte que lorsque l'espace intérieur contient le liquide réactif,
dans la position d'ouverture du dispositif catalytique, la chambre catalytique est en communication de fluide avec l'espace intérieur, de sorte que le gaz est généré par mise en contact du liquide réactif avec le catalyseur, et
dans la position de fermeture du dispositif catalytique, le catalyseur est isolé du liquide réactif.

12. Appareil selon la revendication précédente, dans lequel le dispositif catalytique est disposé au moins partiellement, voire intégralement, dans l'espace intérieur de l'enceinte.

13. Appareil selon l'une quelconque des revendications 11 et 12, dans lequel, lorsque l'espace intérieur de l'enceinte contient le liquide réactif, le piston est plus proche de surface libre (165) du liquide réactif dans la position de fermeture que dans la position d'ouverture.

14. Procédé de génération d'un gaz par mise en contact d'un liquide réactif avec un catalyseur de la réaction de génération du gaz, le procédé comportant les étapes successives suivantes consistant à :
i) disposer d'un appareil selon l'une quelconque des revendications 11 à 13 dans lequel l'espace intérieur de l'enceinte contient le liquide réactif,
ii) placer le dispositif catalytique dans la position d'ouverture, de sorte que le liquide réactif entre en contact avec le catalyseur,
dans lequel, de préférence:
- le gaz est le dihydrogène,
- le catalyseur est adapté à catalyser l'hydrolyse d'une solution aqueuse comportant un hydrure, de préférence le catalyseur comporte plus de 95,0% d'un métal choisi parmi le platine, le ruthénium, le cobalt, le nickel et leurs alliages, et
- le liquide réactif est une solution aqueuse comportant un hydrure.

## Patentansprüche

1. Katalytische Vorrichtung (20), die Folgendes beinhaltet:
- einen Hohlkörper (55),
- einen Kolben (60), der sich in dem Hohlkörper befindet,
- einen Katalysator für eine Reaktion zur Erzeugung eines Gases durch das Zusammenbringen einer Reaktionsflüssigkeit (25) mit dem Katalysator (118), wobei sich der Katalysator in einer Katalysekammer (120) befindet,
wobei der Kolben und der Hohlkörper eine dicht verschlossene Kompressionskammer (65) definieren, um ein komprimierbares Fluid (70) einzuschließen, und relativ zueinander zwischen einer Schließstellung, in der die Katalysekammer gegenüber der Reaktionsflüssigkeit dicht ist, und einer Öffnungsstellung, um die Reaktionsflüssigkeit in die Katalysekammer eintreten zu lassen, beweglich sind,
wobei die katalytische Vorrichtung dazu eingerichtet ist, von der Öffnungsstellung in die Schließstellung bzw. von der Schließstellung in die Öffnungsstellung überzugehen, wenn das komprimierbare Fluid in der Kompressionskammer eingeschlossen ist und eine auf den Kolben wirkende Kraft größer als oder gleich bzw. kleiner als eine Schließkraft ist.

2. Katalytische Vorrichtung nach Anspruch 1, wobei der Katalysator dazu angepasst ist, die Hydrolyse einer wässrigen Lösung, die ein Hydrid umfasst, zu katalysieren, wobei der Katalysator vorzugsweise mehr als 95,0 % eines Metalls umfasst, das aus einem von Platin, Ruthenium, Cobalt, Nickel und deren Legierungen ausgewählt ist.

3. Katalytische Vorrichtung nach einem beliebigen der Ansprüche 1 und 2, wobei das komprimierbare Fluid in der Kompressionskammer eingeschlossen ist, wobei das komprimierbare Fluid vorzugsweise ein Gas ist und vorzugsweise aus einem von einem neutralen Gas und Luft ausgewählt ist.

4. Katalytische Vorrichtung nach einem beliebigen der vorhergehenden Ansprüche, wobei der Körper ein Ventil (92) umfasst, das dazu konfiguriert ist, das komprimierbare Fluid aus der Kompressionskammer abzulassen.

5. Katalytische Vorrichtung nach einem beliebigen der vorhergehenden Ansprüche, die einen Anschlag (95) umfasst, der so angeordnet ist, dass der Kolben in der Öffnungsendstellung an dem Anschlag anliegt.

6. Katalytische Vorrichtung nach einem beliebigen der Ansprüche 3 bis 5, wobei der Druck des komprimierbaren Fluids in der Öffnungsendstellung gleich dem oder größer als der Atmosphärendruck ist.

7. Katalytische Vorrichtung nach einem beliebigen der vorhergehenden Ansprüche, wobei der Katalysator an dem Kolben und/oder an dem Hohlkörper, vorzugsweise starr, befestigt ist.

8. Katalytische Vorrichtung nach einem beliebigen der vorhergehenden Ansprüche, wobei der Katalysator an einem Katalyseträger, der vorzugsweise porös ist, angeordnet ist, welcher die Form eines Blocks mit einer Dicke größer als 1 mm aufweist oder die Form einer Beschichtung mit einer Dicke kleiner als 1 mm aufweist.

9. Katalytische Vorrichtung nach dem vorhergehenden Anspruch, wobei der Masseanteil des Katalysators, ausgedrückt auf Basis der Summe aus der Masse des Katalyseträgers und der Masse des Katalysators, mehr als 50,0 % beträgt.

10. Katalytische Vorrichtung nach einem beliebigen der vorhergehenden Ansprüche, wobei der Kolben einen Deckel (115) umfasst, wobei der Deckel in der Schließstellung an dem Hohlkörper anliegt und die Katalysekammer vollständig abdichtet und in der Öffnungsstellung in einem Abstand zu dem Hohlkörper angeordnet ist.

11. Apparat (5) zur Erzeugung eines Gases, umfassend ein Gehäuse (10), das einen Innenraum (15) definiert, um eine Reaktionsflüssigkeit (25) einzuschließen, und eine katalytische Vorrichtung (20) nach einem beliebigen der vorhergehenden Ansprüche,
wobei der Apparat derart konfiguriert ist, dass, wenn der Innenraum die Reaktionsflüssigkeit einschließt,
in der Öffnungsstellung der katalytischen Vorrichtung die Katalysekammer in Fluidkommunikation mit dem Innenraum steht, sodass das Gas durch das Zusammenbringen der Reaktionsflüssigkeit mit dem Katalysator erzeugt wird, und
in der Schließstellung der katalytischen Vorrichtung der Katalysator von der Reaktionsflüssigkeit isoliert ist.

12. Apparat nach dem vorhergehenden Anspruch, wobei die katalytische Vorrichtung mindestens teilweise oder sogar vollständig in dem Innenraum des Gehäuses angeordnet ist.

13. Apparat nach einem beliebigen der Ansprüche 11 und 12, wobei, wenn der Innenraum des Gehäuses die Reaktionsflüssigkeit einschließt, sich der Kolben in der Schließstellung näher an der freien Oberfläche (165) der Reaktionsflüssigkeit befindet als in der Öffnungsstellung.

14. Verfahren zur Erzeugung eines Gases durch das Zusammenbringen einer Reaktionsflüssigkeit mit einem Katalysator für die Reaktion zur Erzeugung des Gases, wobei das Verfahren die folgenden aufeinanderfolgenden Schritte umfasst, die aus Folgendem bestehen:
i) Bereitstellen eines Apparats nach einem beliebigen der Ansprüche 11 bis 13, wobei der Innenraum des Gehäuses die Reaktionsflüssigkeit einschließt,
ii) Platzieren der katalytischen Vorrichtung in der Öffnungsstellung, sodass die Reaktionsflüssigkeit mit dem Katalysator in Kontakt kommt,
wobei vorzugsweise:
- das Gas Diwasserstoff ist,
- der Katalysator dazu angepasst ist, die Hydrolyse einer wässrigen Lösung, die ein Hydrid umfasst, zu katalysieren, wobei der Katalysator vorzugsweise mehr als 95,0 % eines Metalls umfasst, das aus einem von Platin, Ruthenium, Cobalt, Nickel und deren Legierungen ausgewählt ist, und
- die Reaktionsflüssigkeit eine wässrige Lösung ist, die ein Hydrid umfasst.

## Claims

1. Catalytic device (20) comprising:
- a hollow body (55),
- a piston (60) housed in the hollow body,
- a catalyst of a gas generation reaction based on bringing a reactive liquid (25) into contact with the catalyst (118), the catalyst being housed in a catalysis chamber (120),
the piston and the hollow body defining a hermetic compression chamber (65) for containing a compressible fluid (70), and being mobile relative to one another between a closed position in which the catalysis chamber is tight to the reactive liquid, and an open position for the entry of the reactive liquid into the catalysis chamber,
the catalytic device being conformed to switch from the open position to the closed position, respectively from the closed position to the open position, when the compressible fluid is contained in the compression chamber and a force applied to the piston is greater than or equal to, respectively less than, a closure force.

2. Catalytic device according to Claim 1, wherein the catalyst is suitable for catalyzing the hydrolysis of an aqueous solution comprising a hydride, preferably the catalyst comprises more than 95.0% of a metal chosen from among platinum, ruthenium, cobalt, nickel and the alloys thereof.

3. Catalytic device according to either one of Claims 1 and 2, wherein the compressible fluid is contained in the compression chamber, the compressible fluid preferably being a gas, preferably chosen from among an inert gas and air.

4. Catalytic device according to any one of the preceding claims, wherein the body comprises a relief valve (92) configured to drain the compressible fluid from the compression chamber.

5. Catalytic device according to any one of the preceding claims, comprising a stop (95) disposed such that the piston bears against said stop in the extreme open position.

6. Catalytic device according to any one of Claims 3 to 5, wherein the pressure of the compressible fluid in the extreme open position is equal to or greater than atmospheric pressure.

7. Catalytic device according to any one of the preceding claims, wherein the catalyst is fixed, preferably rigidly, to the piston and/or to the hollow body.

8. Catalytic device according to any one of the preceding claims, wherein the catalyst is disposed on a catalysis support, preferably porous, in the form of a block of a thickness greater than 1 mm, or is in the form of a coating having a thickness less than 1 mm.

9. Catalytic device according to the preceding claim, wherein the percentage by weight of the catalyst, expressed on the basis of the sum of the weight of the catalysis support and weight of the catalyst, is greater than 50.0%.

10. Catalytic device according to any one of the preceding claims, wherein the piston comprises a cover (115), the cover bearing on the hollow body in the closed position and completely blocking the catalysis chamber, and being disposed at a distance from the hollow body in the open position.

11. Gas generation apparatus (5) comprising an enclosure (10) defining an interior space (15) for containing a reactive liquid (25), and a catalytic device (20) according to any one of the preceding claims,
the apparatus being configured such that when the interior space contains the reactive liquid,
in the open position of the catalytic device, the catalytic chamber is fluidically connected with the interior space, such that the gas is generated by bringing the reactive liquid into contact with the catalyst, and
in the closed position of the catalytic device, the catalyst is isolated from the reactive liquid.

12. Apparatus according to the preceding claim, wherein the catalytic device is disposed at least partially, even fully, in the interior space of the enclosure.

13. Apparatus according to either one of Claims 11 and 12, wherein, when the interior space of the enclosure contains the reactive liquid, the piston is closer to the free surface (165) of the reactive liquid in the closed position than in the open position.

14. Gas generation method based on bringing a reactive liquid into contact with a catalyst of the gas generation reaction, the method comprising the following successive steps consisting in:
i) obtaining an apparatus according to any one of Claims 11 to 13 in which the interior space of the enclosure contains the reactive liquid,
ii) placing the catalytic device in the open position, such that the reactive liquid enters into contact with the catalyst,
wherein, preferably:
- the gas is dihydrogen,
- the catalyst is suitable for catalyzing the hydrolysis of an aqueous solution comprising a hydride, preferably the catalyst comprises more than 95.0% of a metal chosen from among platinum, ruthenium, cobalt, nickel and the alloys thereof, and
- the reactive liquid is an aqueous solution comprising a hydride.
